# EUROPÄISCHE PATENTSCHRIFT

(11) **EP 3 448 727 B1**
(45) Veröffentlichungstag und Bekanntmachung des Hinweises auf die Patenterteilung: **22.01.2020**
(21) Anmeldenummer: 17722387.2
(22) Anmeldetag: 20.04.2017
(51) Int. Cl.: B60S 1/04, B60S 1/08

(54) **WISCHVORRICHTUNG**
WIPER DEVICE
SYSTÈME D'ESSUIE-GLACE

(30) Priorität: 28.04.2016 DE 102016207271
(43) Veröffentlichungstag der Anmeldung: 06.03.2019
(73) Patentinhaber: Robert Bosch GmbH, 70442 Stuttgart (DE)
(72) Erfinder: KOBERSTAEDT, Markus, 77815 Buehl (DE); METZ, Ulrich, 77855 Achern (DE)
(86) Internationale Anmeldenummer: PCT/EP2017/059333
(87) Internationale Veröffentlichungsnummer: WO 2017/186552

(56) Entgegenhaltungen:
- WO-A1-2014/102060
- DE-A1-102013 206 843
- FR-A1- 2 848 952
- US-A1- 2009 248 243
- US-A1- 2013 124 011

## Beschreibung

### Stand der Technik

Es ist bereits eine Wischvorrichtung mit zumindest einem Wischerantrieb, der zu einem richtungswechselnden Antrieb eines Wischarms über einen Wischbereich einer Fahrzeugscheibe vorgesehen ist, und mit zumindest einer Steuer- und/oder Regeleinheit, die zu einer Ansteuerung des zumindest einen Wischerantriebs zur Bewegung des Wischarms zwischen einer ersten Wischbereichsgrenze und einer zweiten Wischbereichsgrenze vorgesehen ist, vorgeschlagen worden.

Aus dem Dokument US 2009/248243 ist eine Wischvorrichtung mit den Merkmalen des Oberbegriffs des Anspruchs 1 bekannt. Das Dokument WO 2014/102060 offenbart ein Verfahren zur Einstellung einer Wischbereichsgrenze eines Wischbereichs mit den Merkmalen des Oberbegriffs des Anspruchs 10.

### Offenbarung der Erfindung

Die Erfindung geht aus von einer Wischvorrichtung mit zumindest einem Wischerantrieb, der zu einem richtungswechselnden Antrieb eines Wischarms über einen Wischbereich einer Fahrzeugscheibe vorgesehen ist, und mit zumindest einer Steuer- und/oder Regeleinheit, die zu einer Ansteuerung des zumindest einen Wischerantriebs zur Bewegung des Wischarms zwischen einer ersten Wischbereichsgrenze und einer zweiten Wischbereichsgrenze vorgesehen ist.

Es wird vorgeschlagen, dass die Wischvorrichtung zumindest eine Schnittstelle umfasst, die zu einer Kommunikation der Steuer- und/oder Regeleinheit mit einer externen Endnutzereinheit vorgesehen ist, wobei die externe Endnutzereinheit zumindest zur Einstellung der ersten Wischbereichsgrenze vorgesehen ist. Dadurch kann eine besonders komfortable Nachjustierung des Wischbereichs erzielt werden. Der Wischbereich kann auf besonders einfache Weise an Wünsche des Endnutzers angepasst werden. Die externe Endnutzereinheit ist insbesondere dazu vorgesehen, zumindest die erste Wischbereichsgrenze durch einen Endbenutzer einzustellen und/oder zu verändern. Unter einem "Wischerantrieb" soll in diesem Zusammenhang insbesondere ein motorischer Antrieb von zumindest einem Wischarm verstanden werden. Der zumindest eine Wischerantrieb umfasst vorzugsweise zumindest einen Elektromotor und/oder ein Wischergetriebe.

Unter einem "Wischbereich" soll in diesem Zusammenhang insbesondere ein Bereich verstanden werden, der von einer Wischlippe eines mit dem Wischarm gekoppelten Wischblatts überstrichen wird. Der Wischbereich weist insbesondere eine Kontur mit zwei geraden Grenzlinien und zwei gekrümmten Grenzlinien auf, wobei die gekrümmten Grenzlinien die geraden Grenzlinien miteinander verbinden. Die Fahrzeugscheibe bildet vorzugsweise eine Frontscheibe oder eine Heckscheibe eines Kraftfahrzeugs aus. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie, mit einem in der Speichereinheit gespeicherten Betriebsprogramm verstanden werden.

Unter einer "Wischbereichsgrenze" soll in diesem Zusammenhang insbesondere eine Grenzlinie verstanden werden, an welcher der Wischbereich in zumindest eine Richtung endet. Die Grenzlinie erstreckt sich entlang einer Umkehrlinie, an welcher die Wischlippe des Wischblatts bei einem Umkehrvorgang die Richtung wechselt. Die Wischlippe soll dabei idealisiert als geradlinig verlaufend betrachtet werden. Die Schnittstelle umfasst vorteilhaft zumindest eine Kommunikationseinheit.

Unter einer "externen Endnutzereinheit" soll in diesem Zusammenhang insbesondere eine Einheit verstanden werden, die von der Wischvorrichtung getrennt ausgebildet und zu einer Nutzung durch einen Endkunden und/oder einen Fahrzeugnutzer vorgesehen ist. Vorteilhaft ist die externe Endnutzereinheit tragbar ausgebildet. Unter "tragbar" soll in diesem Zusammenhang insbesondere mit einer Masse von weniger als 5 kg, bevorzugt von weniger als 1 kg, besonders bevorzugt von weniger als 500 g verstanden werden. Vorteilhaft umfasst die externe Endnutzereinheit eine Ausgabeeinheit und/oder eine Eingabeeinheit. Die Ausgabeeinheit weist bevorzugt einen berührungsempfindlichen Bildschirm auf. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass die Steuer- und/oder Regeleinheit dazu vorgesehen ist, abhängig von einer Eingabe der externen Endnutzereinheit über die Schnittstelle, zumindest die erste Wischbereichsgrenze ausschließlich innerhalb eines festen Parameterrahmens einzustellen. Dadurch kann eine besonders hohe Betriebssicherheit erzielt werden. Weiterhin können auf zuverlässige Weise gesetzliche Anforderungen an den Wischbereich erfüllt werden. Der feste Parameterrahmen beschreibt vorteilhaft einen Bereich, in dem die Wischbereichsgrenze frei gelegt werden kann. Alternativ beschreibt der feste Parameterrahmen eine diskrete Anzahl an möglichen Wischbereichsgrenzen, von denen jeweils eine Wischbereichsgrenze ausgewählt werden kann.

Ferner wird vorgeschlagen, dass die externe Endnutzereinheit eine Erfassungseinheit aufweist, die zu einer selbstständigen Erfassung einer Wischarmposition und/oder einer Wischblattposition und zu einer zumindest teilweise automatischen Einstellung zumindest der ersten Wischbereichsgrenze in Abhängigkeit der Wischarmposition und/oder der Wischblattposition vorgesehen ist. Dadurch kann eine besonders komfortable Nachjustierung der Wischbereichsgrenze erzielt werden.

Des Weiteren wird vorgeschlagen, dass die Schnittstelle zu einer drahtlosen Kommunikation mit der externen Endnutzereinheit vorgesehen ist. Dadurch kann eine besonders komfortable Einstellung und/oder Veränderung des Wischbereichs erzielt werden. Eine Verkabelung der externen Endnutzereinheit kann vorteilhaft vermieden werden.

Zusätzlich wird vorgeschlagen, dass die externe Endnutzereinheit zumindest zur Einstellung der zweiten Wischbereichsgrenze vorgesehen ist. Dadurch kann eine besonders flexible Anpassung des Wischbereichs vorgenommen werden. Vorzugsweise ist die Steuer- und/oder Regeleinheit dazu vorgesehen, abhängig von einer Eingabe der externen Endnutzereinheit über die Schnittstelle, zumindest die zweite Wischbereichsgrenze ausschließlich innerhalb eines festen Parameterrahmens einzustellen.

Weiterhin wird vorgeschlagen, dass der zumindest eine Wischerantrieb einen Reversierantrieb ausbildet. Dadurch kann eine Wischbereichsgrenze besonders präzise eingestellt werden. Dadurch können vorteilhaft zumindest zwei Wischarme unabhängig voneinander angesteuert und deren Wischbereiche eingestellt werden. Vorteilhaft umfasst der Wischerantrieb einen Schrittmotor.

Ferner wird vorgeschlagen, dass die externe Endnutzereinheit zu einer zumindest teilweise automatischen Einstellung der Wischbereichsgrenze in Abhängigkeit von zumindest einem Umgebungsparameter vorgesehen ist. Dadurch kann eine besonders anwenderfreundliche Justierung des Wischbereichs vorgenommen werden. Unter einem "Umgebungsparameter" soll in diesem Zusammenhang insbesondere ein Scheibenzustand, ein Datum, eine Uhrzeit, eine Helligkeit, ein Benetzungsgrad der Fahrzeugscheibe, eine Oberflächenbeschaffenheit der Fahrzeugscheibe, eine Mechanik und/oder ein Wetterparameter verstanden werden.

Des Weiteren wird vorgeschlagen, dass die externe Endnutzereinheit zu einer selbstständigen Erfassung des zumindest einen Umgebungsparameters vorgesehen ist. Dadurch kann eine besonders komfortable Anpassung des Wischbereichs an aktuelle Umgebungsbedingungen erzielt werden.

Zusätzlich wird vorgeschlagen, dass die externe Endnutzereinheit zumindest eine Kamera umfasst, die zu einer optischen Erfassung der Wischarmposition und/oder der Wischblattposition vorgesehen ist. Dadurch kann eine besonders intuitive und zuverlässige Erfassung der Wischarmposition zur Ermittlung einer Wischbereichsgrenze erzielt werden.

Zudem wird vorgeschlagen, dass die externe Endnutzereinheit ein Mobiltelefon, insbesondere ein Smartphone, ausbildet. Dadurch kann die externe Endnutzereinheit in eine bestehende Bedienlösung vorteilhaft integriert sein. Eine zum Mobiltelefon zusätzliche Investition ist für einen Endnutzer nicht erforderlich. Alternativ und/oder zusätzlich ist es denkbar, dass die externe Endnutzereinheit einen PC, einen Laptop, ein Tabletcomputer, eine Fernbedienung und/oder eine Smartwatch ausbildet.

Des Weiteren wird ein System mit einer erfindungsgemäßen Wischvorrichtung und mit einer externen Endnutzereinheit vorgeschlagen.

Weiterhin wird ein Verfahren zur Einstellung einer Wischbereichsgrenze eines Wischbereichs vorgeschlagen, der von einem Wischblatt einer Wischvorrichtung überstrichen wird, wobei die Einstellung über eine externe Endnutzereinheit erfolgt, die über eine Schnittstelle mit einer Steuer- und/oder Regeleinheit der Wischvorrichtung kommuniziert.

Zusätzlich wird vorgeschlagen, dass ein Wischvorgang aufgenommen und selbstständig ein Abstand des Wischblatts zu einem Rand der Fahrzeugscheibe und/oder einer A-Säule ermittelt wird. Ferner wird vorgeschlagen, dass ein individueller optimaler Abstand zum Rand der Fahrzeugscheibe bestimmt wird. Weiterhin wird vorgeschlagen, dass ein Parameter selbstständig bestimmt wird, mit dem der individuelle optimale Abstand zum Rand der Fahrzeugscheibe einstellbar ist. Zudem wird vorgeschlagen, dass der Parameter von der externen Endnutzereinheit über die Schnittstelle zur Steuer- und/oder Regeleinheit übertragen und gespeichert wird. Insbesondere wird das Wischblatt anschließend aufgrund des gespeicherten Parameters bis zum individuell optimalen Abstand zum Rand der Fahrzeugscheibe angesteuert.

Die erfindungsgemäße Wischvorrichtung soll hierbei nicht auf die oben beschriebene Anwendung und Ausführungsform beschränkt sein. Insbesondere kann die erfindungsgemäße Wischvorrichtung zu einer Erfüllung einer hierin beschriebenen Funktionsweise, eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

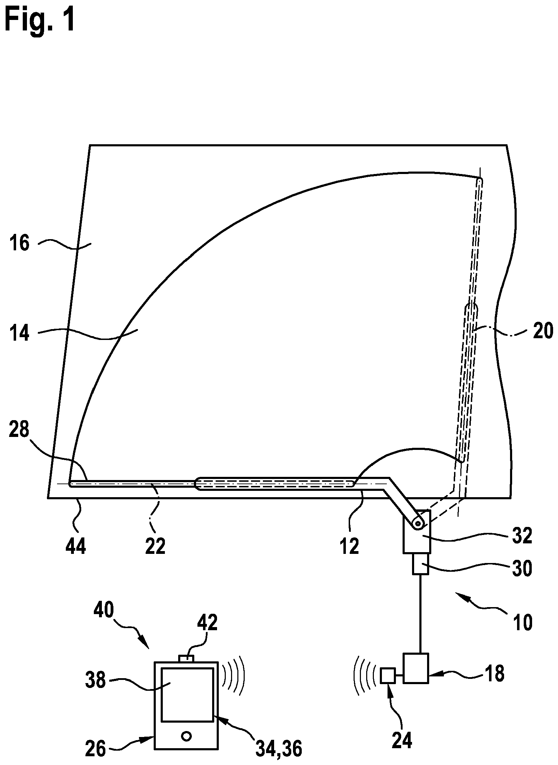

- Fig. 1: ein schematischer Aufbau einer erfindungsgemäßen Wischvorrichtung.

### Beschreibung des Ausführungsbeispiels

In der Figur 1 ist schematisch ein möglicher Aufbau einer erfindungsgemäßen Wischvorrichtung gezeigt. Die Wischvorrichtung weist einen Wischerantrieb auf. Die Wischvorrichtung umfasst ein Wischarm. Weiterhin umfasst die Wischvorrichtung ein Wischblatt. Das Wischblatt ist lösbar mit dem Wischarm gekoppelt. Das Wischblatt bildet ein Flachwischblatt aus. Das Wischblatt umfasst eine nicht gezeigte Wischlippe, die über eine Fahrzeugscheibe streicht. Die Fahrzeugscheibe bildet eine Frontscheibe eines nicht dargestellten Kraftfahrzeugs aus. Es ist auch denkbar, dass die Fahrzeugscheibe eine Heckscheibe eines Kraftfahrzeugs ausbildet. Die Wischvorrichtung kann zumindest einen weiteren Wischerantrieb, einen weiteren Wischarm und/oder ein weiteres Wischblatt umfassen (hier nicht gezeigt).

Der Wischerantrieb 10 ist zu einem richtungswechselnden Antrieb des Wischarms 12 über einen Wischbereich 14 der Fahrzeugscheibe 16 vorgesehen. Der Wischerantrieb 10 umfasst einen Elektromotor 30. Der Wischerantrieb 10 umfasst ein Wischergetriebe 32. Der Wischerantrieb 10 bildet einen Reversierantrieb aus. Der Elektromotor 30 bildet einen Schrittmotor aus. Eine Drehrichtung des Elektromotors 30 ändert sich während eines Wischvorgangs regelmäßig. Die Wischvorrichtung umfasst eine Steuer- und/oder Regeleinheit 18. Die Steuer- und/oder Regeleinheit 18 ist zu einer Ansteuerung des Wischerantriebs 10 zur Bewegung des Wischarms 12 zwischen einer ersten Wischbereichsgrenze 20 und einer zweiten Wischbereichsgrenze 22 vorgesehen ist. Die Wischbereichsgrenzen 20, 22 bilden Grenzlinien aus, an welchen der Wischbereich 14 in eine jeweilige Wischrichtung endet.

Die Wischvorrichtung umfasst eine Schnittstelle 24. Die Schnittstelle 24 ist zu einer Kommunikation der Steuer- und/oder Regeleinheit 18 mit einer externen Endnutzereinheit 26 vorgesehen. Die Schnittstelle 24 umfasst hierzu eine nicht näher gezeigte Kommunikationseinheit. Die Schnittstelle 24 ist zu einer drahtlosen Kommunikation mit der externen Endnutzereinheit 26 vorgesehen. Die Schnittstelle 24 ist zu einer drahtlosen Kommunikation nach einem Industriestandard gemäß IEEE 802.15.1 und/oder gemäß IEEE-802.11-Familie vorgesehen.

Die externe Endnutzereinheit 26 ist zur Einstellung der ersten Wischbereichsgrenze 20 vorgesehen. Die externe Endnutzereinheit 26 ist dazu vorgesehen, die erste Wischbereichsgrenze 20 durch einen Endbenutzer einzustellen und/oder zu verändern. Die externe Endnutzereinheit 26 bildet ein Smartphone aus. Es ist in diesem Zusammenhang jedoch auch denkbar, dass die externe Endnutzereinheit 26 einen PC, einen Laptop, ein Tabletcomputer, eine Fernbedienung und/oder eine Smartwatch ausbildet. Die Wischvorrichtung und die externe Endnutzereinheit 26 bilden zusammen ein System aus.

Die externe Endnutzereinheit 26 ist von der Wischvorrichtung getrennt ausgebildet. Die externe Endnutzereinheit 26 ist zu einer Nutzung durch einen Endkunden und/oder einen Fahrzeugnutzer vorgesehen. Die externe Endnutzereinheit 26 ist tragbar ausgebildet. Die externe Endnutzereinheit 26 weist eine Masse von weniger als 500 g auf. Die externe Endnutzereinheit 26 umfasst eine Ausgabeeinheit 34. Die Ausgabeeinheit 34 ist zu einer optischen Ausgabe zumindest eines Parameters vorgesehen. Der Parameter kann dabei insbesondere einen Winkelwert umfassen, der eine aktuelle Wischbereichsgrenze 20, 22 oder eine einzustellende Wischbereichsgrenze beschreibt. Es ist in diesem Zusammenhang auch denkbar, dass die Ausgabeeinheit 34 zu einer optischen und/oder haptischen Ausgabe von Informationen und/oder Parametern vorgesehen ist. Die externe Endnutzereinheit 26 umfasst eine Eingabeeinheit 36. Die Eingabeeinheit 36 ist zu einer Eingabe von Informationen durch einen Bediener vorgesehen. Im gezeigten Ausführungsbeispiel bilden die Ausgabeeinheit 34 und die Eingabeeinheit 36 einen berührungsempfindlichen Bildschirm 38 aus.

Die externe Endnutzereinheit 26 weist eine Erfassungseinheit 40 auf. Die Erfassungseinheit 40 ist zu einer selbstständigen Erfassung einer Wischarmposition vorgesehen. Die Erfassungseinheit 40 ist zu einer selbstständigen Erfassung einer Wischblattposition vorgesehen. Die externe Endnutzereinheit 26 umfasst eine Kamera 42, die zu einer optischen Erfassung der Wischarmposition und/oder der Wischblattposition vorgesehen ist.

Die Erfassungseinheit 40 ist zu einer zumindest teilweise automatischen Einstellung der ersten Wischbereichsgrenze 20, in Abhängigkeit der Wischarmposition und/oder der Wischblattposition, vorgesehen. Die Erfassungseinheit 40 ist zu einer zumindest teilweise automatischen Einstellung der zweiten Wischbereichsgrenze 22, in Abhängigkeit der Wischarmposition und/oder der Wischblattposition, vorgesehen.

Die externe Endnutzereinheit 26 ist zu einer automatischen Einstellung der ersten Wischbereichsgrenze 20, in Abhängigkeit von einem Umgebungsparameter, vorgesehen. Die externe Endnutzereinheit 26 ist zu einer automatischen Einstellung der zweiten Wischbereichsgrenze 22, in Abhängigkeit von einem Umgebungsparameter, vorgesehen. Der Umgebungsparameter kann insbesondere ein Scheibenzustand, ein Datum, eine Uhrzeit, eine Helligkeit, ein Benetzungsgrad der Fahrzeugscheibe 16, eine Oberflächenbeschaffenheit der Fahrzeugscheibe 16, eine Mechanik und/oder ein Wetterparameter sein. Die externe Endnutzereinheit 26 ist dabei zu einer selbstständigen Erfassung des Umgebungsparameters vorgesehen.

Die Steuer- und/oder Regeleinheit 18 ist dazu vorgesehen, abhängig von einer Eingabe der externen Endnutzereinheit 26 über die Schnittstelle 24 die erste Wischbereichsgrenze 20 ausschließlich innerhalb eines festen Parameterrahmens einzustellen. Die Steuer- und/oder Regeleinheit 18 ist dazu vorgesehen, abhängig von einer Eingabe der externen Endnutzereinheit 26 über die Schnittstelle 24 die zweite Wischbereichsgrenze 22 ausschließlich innerhalb eines festen Parameterrahmens einzustellen. Die festen Parameterrahmen entsprechen dabei den gesetzlichen und/oder technischen Vorgaben, die bei einem Wischbetrieb zwingend eingehalten werden müssen.

Zur Einstellung der Wischbereichsgrenzen 20, 22 gibt ein Endnutzer die gewünschten Wischbereichsgrenzen 20, 22 in die externe Endnutzereinheit 26 ein. Die externe Endnutzereinheit 26 interpretiert die Eingaben und legt entsprechende Parameter fest. Die Parameter werden drahtlos über die Schnittstelle 24 an die Steuer- und/oder Regeleinheit 18 der Wischvorrichtung übermittelt.

Zusätzlich oder alternativ kann der Wischvorgang von der Erfassungseinheit 40 aufgenommen, und selbstständig ein Abstand des Wischblatts 28 zu einem Rand 44 der Fahrzeugscheibe 16 ermittelt werden. Hierbei kann auch ein individueller optimaler Abstand zu einer hier nicht gezeigten A-Säule bestimmt werden. Ein Parameter wird anschließend selbstständig durch die externe Endnutzereinheit 26 bestimmt, mit dem der individuelle optimale Abstand zum Rand 44 einstellbar ist. Der Parameter wird von der externen Endnutzereinheit 26 über die Schnittstelle 24 zur Steuer- und/oder Regeleinheit 18 übertragen und dort gespeichert. Das Wischblatt 28 wird anschließend aufgrund des gespeicherten Parameters genau bis zum individuell optimalen Abstand bewegt und wechselt dort seine Bewegungsrichtung.

## Patentansprüche

1. Wischvorrichtung mit zumindest einem Wischerantrieb (10), der zu einem richtungswechselnden Antrieb eines Wischarms (12) über einen Wischbereich (14) einer Fahrzeugscheibe (16) vorgesehen ist, und mit zumindest einer Steuer- und/oder Regeleinheit (18), die zu einer Ansteuerung des zumindest einen Wischerantriebs (10) zur Bewegung des Wischarms (12) zwischen einer ersten Wischbereichsgrenze (20) und einer zweiten Wischbereichsgrenze (22) vorgesehen ist, und mit zumindest einer Schnittstelle (24), die zu einer Kommunikation der Steuer- und/oder Regeleinheit (18) mit einer externen Endnutzereinheit (26) vorgesehen ist, **dadurch gekennzeichnet, dass** die externe Endnutzereinheit (26) zumindest zur Einstellung der ersten Wischbereichsgrenze (20) vorgesehen ist.

2. Wischvorrichtung nach Anspruch 1, **dadurch gekennzeichnet, dass** die Steuer- und/oder Regeleinheit (18) dazu vorgesehen ist, abhängig von einer Eingabe der externen Endnutzereinheit (26) über die Schnittstelle (24), zumindest die erste Wischbereichsgrenze (20) ausschließlich innerhalb eines festen Parameterrahmens einzustellen.

3. Wischvorrichtung nach Anspruch 1 oder 2, **dadurch gekennzeichnet, dass** die externe Endnutzereinheit (26) eine Erfassungseinheit (40) aufweist, die zu einer selbstständigen Erfassung einer Wischarmposition und/oder einer Wischblattposition und zu einer zumindest teilweise automatischen Einstellung zumindest der ersten Wischbereichsgrenze (20) in Abhängigkeit der Wischarmposition und/oder einer Wischblattposition vorgesehen ist.

4. Wischvorrichtung nach einem der vorhergehenden Ansprüche, **dadurch gekennzeichnet, dass** die Schnittstelle (24) zu einer drahtlosen Kommunikation mit der externen Endnutzereinheit (26) vorgesehen ist.

5. Wischvorrichtung nach einem der vorhergehenden Ansprüche, **dadurch gekennzeichnet, dass** die externe Endnutzereinheit (26) zumindest zur Einstellung der zweiten Wischbereichsgrenze (20) vorgesehen ist.

6. Wischvorrichtung nach einem der vorhergehenden Ansprüche, **dadurch gekennzeichnet, dass** der zumindest eine Wischerantrieb (10) einen Reversierantrieb ausbildet.

7. Wischvorrichtung nach einem der vorhergehenden Ansprüche, **dadurch gekennzeichnet, dass** die externe Endnutzereinheit (26) zu einer zumindest teilweise automatischen Einstellung der Wischbereichsgrenze (20) in Abhängigkeit von zumindest einem Umgebungsparameter vorgesehen ist.

8. Wischvorrichtung nach einem der vorhergehenden Ansprüche, **dadurch gekennzeichnet, dass** die externe Endnutzereinheit (26) zu einer selbstständigen Erfassung des zumindest einen Umgebungsparameters vorgesehen ist.

9. System mit einer Wischvorrichtung nach einem der vorhergehenden Ansprüche und mit einer externen Endnutzereinheit (26).

10. Verfahren zur Einstellung einer Wischbereichsgrenze (20) eines Wischbereichs (14), der von einem Wischblatt (28) einer Wischvorrichtung überstrichen wird, **dadurch gekennzeichnet, dass** die Einstellung über eine externe Endnutzereinheit (26) erfolgt, die über eine Schnittstelle (24) mit einer Steuer- und/oder Regeleinheit (18) der Wischvorrichtung kommuniziert.

## Claims

1. Wiper device with at least one wiper drive (10) that is provided to drive a wiper arm (12) in a direction-changing manner over a wiping region (14) of a vehicle windscreen (16), and with at least one control and/or regulating unit (18) that is provided to actuate the at least one wiper drive (10) to move the wiper arm (12) between a first wiping region boundary (20) and a second wiping region boundary (22), and with at least one interface (24) that is provided for communications between the control and/or regulating unit (18) and an external end user unit (26), **characterized in that** the external end user unit (26) is provided at least for adjusting the first wiping region boundary (20).

2. Wiper device according to Claim 1, **characterized in that** the control and/or regulating unit (18) is provided to adjust at least the first wiping region boundary (20) exclusively within a fixed parameter framework as a function of an input to the external end user unit (26) via the interface (24).

3. Wiper device according to Claim 1 or 2, **characterized in that** the external end user unit (26) comprises a detecting unit (40) that is provided for the automatic detection of a wiper arm position and/or a wiper blade position and for the at least partly automatic adjustment of at least the first wiping region boundary (20) as a function of the wiper arm position and/or a wiper blade position.

4. Wiper device according to any one of the preceding claims, **characterized in that** the interface (24) is provided for wireless communications with the external end user unit (26).

5. Wiper device according to any one of the preceding claims, **characterized in that** the external end user unit (26) is provided at least for adjusting the second wiping region boundary (20).

6. Wiper device according to any one of the preceding claims, **characterized in that** the at least one wiper drive (10) is embodied as a reversing drive.

7. Wiper device according to any one of the preceding claims, **characterized in that** the external end user unit (26) is provided for the at least partly automatic adjustment of the wiping region boundary (20) as a function of at least one environmental parameter.

8. Wiper device according to any one of the preceding claims, **characterized in that** the external end user unit (26) is provided for the automatic detection of the at least one environmental parameter.

9. System with a wiper device according to any one of the preceding claims and with an external end user unit (26).

10. Method for adjusting a wiping region boundary (20) of a wiping region (14) that is wiped over by a wiper blade (28) of a wiper device, **characterized in that** the adjustment is carried out by means of an external end user unit (26) that communicates via an interface (24) with a control and/or regulating unit (18) of the wiper device.

## Revendications

1. Dispositif d'essuie-glace comprenant au moins un entraînement d'essuie-glace (10), lequel est prévu pour un entraînement dans des sens alternés d'un bras d'essuie-glace (12) sur une zone d'essuyage (14) d'une vitre de véhicule (16), et comprenant au moins une unité de commande et/ou de régulation (18) qui est prévue pour une commande dudit au moins un entraînement d'essuie-glace (10) pour le déplacement du bras d'essuie-glace (12) entre une première limite de zone d'essuyage (20) et une deuxième limite de zone d'essuyage (22), et comprenant au moins une interface (24) qui est prévue pour une communication de l'unité de commande et/ou de régulation (18) avec une unité d'utilisateur final externe (26),
**caractérisé en ce que**
l'unité d'utilisateur final externe (26) est prévue au moins pour le réglage de la première limite de zone d'essuyage (20).

2. Dispositif d'essuie-glace selon la revendication 1, **caractérisé en ce que** l'unité de commande et/ou de régulation (18) est prévue pour, en fonction d'une entrée de l'unité d'utilisateur final externe (26) par le biais de l'interface (24), régler au moins la première limite de zone d'essuyage (20) exclusivement dans une trame de paramètres fixe.

3. Dispositif d'essuie-glace selon la revendication 1 ou 2, **caractérisé en ce que** l'unité d'utilisateur final externe (26) comprend une unité de détection (40) qui est prévue pour une détection automatique d'une position de bras d'essuie-glace et/ou d'une position de balai d'essuie-glace et pour un réglage au moins partiellement automatique d'au moins la première limite de zone d'essuyage (20) en fonction de la position de bras d'essuie-glace et/ou d'une position de balai d'essuie-glace.

4. Dispositif d'essuie-glace selon l'une des revendications précédentes, **caractérisé en ce que** l'interface (24) est prévue pour une communication sans fil avec l'unité d'utilisateur final externe (26).

5. Dispositif d'essuie-glace selon l'une des revendications précédentes, **caractérisé en ce que** l'unité d'utilisateur final externe (26) est prévue au moins pour le réglage de la deuxième limite de zone d'essuyage (20).

6. Dispositif d'essuie-glace selon l'une des revendications précédentes, **caractérisé en ce que** ledit au moins un entraînement d'essuie-glace (10) forme un entraînement réversible.

7. Dispositif d'essuie-glace selon l'une des revendications précédentes, **caractérisé en ce que** l'unité d'utilisateur final externe (26) est prévue pour un réglage au moins partiellement automatique de la limite de zone d'essuyage (20) en fonction d'au moins un paramètre d'environnement.

8. Dispositif d'essuie-glace selon l'une des revendications précédentes, **caractérisé en ce que** l'unité d'utilisateur final externe (26) est prévue pour une détection automatique dudit au moins un paramètre d'environnement.

9. Système comprenant un dispositif d'essuie-glace selon l'une des revendications précédentes et une unité d'utilisateur final externe (26).

10. Procédé de réglage d'une limite (20) d'une zone d'essuyage (14) qui est balayée par un balai d'essuie-glace (28) d'un dispositif d'essuie-glace, **caractérisé en ce que** le réglage s'effectue par le biais d'une unité d'utilisateur final externe (26) qui communique, par le biais d'une interface (24), avec une unité de commande et/ou de régulation (18) du dispositif d'essuie-glace.
